Europäisches Patentamt

European Patent Office

Office européen des brevets

(11) Veröffentlichungsnummer: **0 215 306 B1**

# EUROPÄISCHE PATENTSCHRIFT

(45) Veröffentlichungstag der Patentschrift:
09.01.91 Patentblatt 91/02

(51) Int. Cl.⁵: **C12C 11/04**

(21) Anmeldenummer: 86111354.6

(22) Anmeldetag: 16.08.86

(54) **Bierherstellungsverfahren.**

Die Akte enthält technische Angaben, die nach dem Eingang der Anmeldung eingereicht wurden und die nicht in dieser Patentschrift enthalten sind.

(30) Priorität: 22.08.85 DE 3530009

(43) Veröffentlichungstag der Anmeldung:
25.03.87 Patentblatt 87/13

(45) Bekanntmachung des Hinweises auf die Patenterteilung:
09.01.91 Patentblatt 91/02

(84) Benannte Vertragsstaaten:
AT BE CH DE FR GB LI NL

(56) Entgegenhaltungen:
EP-A- 0 125 615
DE-A- 1 442 233
FR-A- 2 204 686
GB-A- 1 174 618

(56) Entgegenhaltungen:
JOURNAL OF FERMENTATION TECHNOLOGY, Band 46, 1968, Seiten 1336-1343, JP; K. WATANABE et al.: "Production of saccharogenic amylase of Rhizopus by submerged culture"
CHEMICAL ABSTRACTS, Band 78, Nr. 21, 28. Mai 1973, Seite 242, Zusammenfassung Nr. 134471y, Columbus, Ohio, US; P.W. MUELLER: "Ciba-Geigy enzymes for unmalted grain treatment in the brewery"
CHEMICAL ABSTRACTS, Band 90, Nr. 5, 29. Januar 1979, Seite 188, Zusammenfassung Nr. 35489b, Columbus, Ohio, US; T. TAKAHASHI et al.: "Purification and some properties of three forms of glucoamylase from a Rhizopus species"

(73) Patentinhaber: Röhm GmbH
Kirschenallee Postfach 4242
D-6100 Darmstadt 1 (DE)

(72) Erfinder: Plainer, Hermann, Dr.
Am Wembach 15
D-6107 Reinheim 1 (DE)
Erfinder: Sprössler, Bruno, Dr.
Auf der Schmelz 93
D-6101 Rossdorf 1 (DE)
Erfinder: Uhlig, Helmut, Dr.
Auf dem Wingert 4
D-6101 Rossdorf 1 (DE)

## Beschreibung

Die Erfindung betrifft ein Verfahren zur Herstellung von Bier, insbesondere von Diätbier mit niedrigem Kohlehydratgehalt unter 1 Gew.%.

### Stand der Technik

Bei der üblichen Bierherstellung wird die Würze mit Bierhefe vergoren und das erhaltene Bier pasteurisiert. Unter der Pasteurisation versteht man das Abtöten von Keimen durch Erhitzen auf 60°C während etwa 20 min oder auf 70°C während 5 bis 20 sec. (vgl. Ullmann, Enzyklopädie der techn. Chemie, Band 8, 1974, S.490/491). Das Bier enthält üblicherweise etwa 3-4 Gew.% unvergorene Restkohlehydrate.

Bei der Herstellung von Diätbier für Diabetiker oder als nährstoffarme Kost muß durch einen höheren Grad der Vergärung ein Rest-Kohlehydratgehalt unter 2%, vorzugsweise unter 1 Gew.% erreicht werden. Eine so weitgehende Vergärung setzt eine entsprechend weitgehende Verzuckerung der in der Würze noch enthaltenen Polysaccharide, vor allem Dextrine, voraus. Zu diesem Zweck werden Amyloglukosidarsenen aus Asp.-niger-Kulturen eingesetzt. Da diese unter Pasteurisationsbedingungen nicht vollständig inaktiviert werden muß das Bier auf über 80°C erhitzt werden, was besondere Produktionsanlagen erfordert. Um den dafür erforderlichen Energieaufwand zu vermeiden, hat man schon Pilz-β-amylasen eingesetzt, die zwar beim üblichen Pasteurisieren inaktiviert werden, aber eine längere Einwirkungsdauer notwendig machen ; vgl. T.Godfrey und J.Reichelt, Industrial Enzymology - The Application of Enzymes in Industrie, (Macmillan Publishers, The Nature Press, 1983, S.252-254).

### Aufgabe und Lösung

Die Herstellung von kohlehydratarmem Bier soll dahingehend verbessert werden, daß der erforderliche Abbau der Polysaccharide schnell vonstatten geht und daß zur Inaktivierung der eingesetzten Enzyme die übliche Pasteurisation ausreicht.

Es wurde gefunden, daß die gestellte Aufgabe bei einem Verfahren zur Herstellung von Bier unter Zusatz einer Amyloglukosidase zur Würze und Inaktivierung der Amyloglukosidase durch Erhitzen nach Abschluß ihrer Einwirkungszeit durch Einsatz einer Amyloglukosidase aus einer Rhizopus-Kultur gelöst wird. Überraschenderweise wird dieses Enzym im Bier schon unter Pasteurisationsbedingungen inaktiviert, während es in einer wäßrigen Stärkelösung erst bei 55-60°C sein Wirkungsoptimum erreicht und bei Temperaturen über 60°C noch eine langandauernde Aktivität aufweist.

### Vorteile der Erfindung

Rhizopus-Amyloglukosidase hat eine der Asp.niger-Amyloglukosidase vergleichbare Spaltungsgeschwindigkeit gegenüber den in der Würze enthaltenen Polysacchariden, wird aber unter üblichen Pasteurisationsbedingungen auf eine Restaktivität von höchstens 1% der Ausgangsaktivität inaktiviert. Dadurch werden Energiekosten eingespart.

### Ausführung der Erfindung

Der Würze werden vorzugsweise vor dem Anstellen 1 bis 100 g handelsübliche Rhizopus-Glucamylase von z.B. 200 Glucamylase units (GAU)/g pro hl Bier zugesetzt. Die Enzymeinwirkung kann mit der Haupt- und Nachgärung einhergehen und findet daher je nach Biersorte im Temperaturbereich von 0-20 °C statt.

Der Restkohlenhydratgehalt sinkt hierbei auf unter 1 Gew.% ab. Das im Bier noch enthaltene Enzym wird durch eine einfache Pasteurisation, wie sie bei den meisten Bieren ohnehin durchgeführt wird, inaktiviert. Dies geschieht am Ende des Brau-Prozesses bei Temperaturen zwischen 60 und 75°C innerhalb 5 sec bis 60 min, wobei die Erhitzungszeit umso kürzer sein kann, je höher die Temperatur liegt. Die Pasteurisierung wird vorzugsweise in einem Wärmetauscher durchgeführt. Wahlweise kann auch nach der Abfüllung in Flaschen pasteurisiert werden.

Die nachfolgend beschriebenen Versuche zeigen, daß Rhizopus-Amyloglucosidase unter Pasteurisationsbedingungen desaktivierbar ist, Asp.niger-Amyloglucosidase aber nicht. Die Versuche werden in fertigem Diätbier durchgeführt, so daß die bei Versuchsbeginn vorliegenden Bedingungen mit der letzten Phase des Brauprozesses vollständig übereinstimmen.

Zu je 1 l Diätbier (Maisel's Edeltropfen Diät-Pilsner, Bayreuth mit 0,6% verwertbaren Restkohlehydraten) werden zugesetzt :

a) 50 mg Amyloglukosidase Novo 200, eine Asp.niger-Amyloglucosidase von Novo, DK ; 200 GAU/g.
b) 10 mg New Sumyzyme, eine Rhizopus-Amyloglucosidase von Sumitomo Shoji Laisha, Ltd. ; 1000 GAU/g.

Die beiden Lösungen werden portioniert und die Portionen unter verschiedenen Bedingungen, wie in der nachfolgenden Tabelle angegeben, pasteurisiert. Anschließend wird die Restaktivität des Enzyms durch Inkubation in 20%igen Maltodextrin-Lösungen (pH=4,5, 40°C, 60 Min) bestimmt.

## Pasteurisation bei 60°C , Restaktivität in %

| Behandlungs-dauer | 10 min | 20 min | 30 min | 60 min |
|---|---|---|---|---|
| A.niger-Glucamylase | 85 % | 70 % | 55 % | 43 % |
| Rhizopus-Glucamylase | 19 % | 2 % | 0.8 % | 0 % |

## Pasteurisation bei 70°C . Restaktivität in %

| Behandlungs-dauer | 10 sec | 20 sec | 30 sec | 60 sec |
|---|---|---|---|---|
| A.niger-Glucamylase | 75 % | 66 % | 58 % | 45 % |
| Rhizopus-Glucamylase | 0,8 % | 0 % | 0 % | 0 % |

## Pasteurisation bei 74°C , Restaktivität in %

| Behandlungs-dauer | 10 sec | 20 sec | 30 sec | 60 sec |
|---|---|---|---|---|
| A.niger-Glucamylase | 49 % | 37 % | 29 % | 17 % |
| Rhizopus-Glucamylase | 0 % | 0 % | 0 % | 0 % |

In der Regel enthalten die aus Rhizopus-Kulturen gewonnenen Amyloglukosidase-Präparate verhältnismäßig hohe Mengen an Protease-Nebenaktivität. Es hat sich gezeigt, daß die Lagerstabilität flüssiger Präparate dieser Art unbefriedigend ist. Weiterhin läßt die Schaumstabilität des mit Rhizopus-Enzymen hergestellten Bieres zu wünschen übrig.

Es wird vermutet, daß diese Nachteile auf die Protease-Nebenaktivität zurückzuführen sind, da sie beim Einsatz eines proteasearmen oder -freien Rhizopus-Präparats nicht auftreten. Vorzugsweise werden daher beim Verfahren der Erfindung Rhizopus-Präparate mit einem Amyloglukosidase/Protease-Verhältnis über 1 GAU/UHB eingesetzt. Sie können in Form von Flüssig-Präparaten mit hoher Lagerstabilität hergestellt und eingesetzt werden. Darin liegt im Vergleich zum Einsatz von Pulver-Präparaten der Vorteil der Staubfreiheit und der einfachen und genauen Dosierbarkeit. Die Schaumstabilität des mit protease-armer Amyloglukosidase hergestellten Bieres ist deutlich verbessert.

Für die Zwecke der Erfindung sind solche Amyloglukosidase-Präparate besonders vorteilhaft, die schon in der Kulturflüssigkeit proteasearm sind. Man erhält solche Kulturflüssigkeiten durch den Einsatz besonders ausgewählter Stämme, insbesondere auf proteinarmen Kulturmedien. Am besten werden proteinfreie Kulturmedien verwendet, die nur anorganischen Stickstoff enthalten. Geeignete Stämme werden durch Mutation und Screening auf Protease-Armut gezüchtet.

Man kann den Proteasegehalt in Rhizopus-Präparaten nachträglich durch geeignete Maßnahmen, wie fraktionierte Fällung, selektive Inaktivierung oder affinitätschromatographische Trennverfahren vermindern. Zur selektiven Inaktivierung eignet sich z.B. eine Behandlung der wäßrigen Amyloglukosidase-Lösung bei einem pH-Wert über 6, insbesondere 7 bis 8. Mit Vorteil wird dabei kurzzeitig, z.B. 5 Minuten, auf eine Temperatur über 30 Grad C, vorzugsweise 40 - 70 Grad C erhitzt. Bei niedrigen Temperaturen in diesem Bereich kann die Wärmebedhandlung länger dauern, gegebenenfalls bis zu 24 Stunden. Bei dieser Behandlung sinkt der Proteasegehalt rasch ab, während sich die Amyloglukosidase als überraschend stabil erweist. Nach der Inaktivierungsbehandlung kann der pH-Wert gewünschtenfalls wieder erniedrigt werden. Durch die Anwesenheit von organischen Polyhydroxyverbindungen, insbesondere solchen mit einem Hydroxylgruppengehalt von einer OH-Gruppe auf 1 bis 2 C-Atome und einem Molekulargewicht unter 10 000, wie Glycerin, Äthylenglykol, Glucose, Sorbit, Invertzucker, Galactose oder Dextrinen, während der Inaktivierungsbehandlung wird die Amyloglukosidase stabilisiert. Berechnet auf die Trockensubstanz des Enzympräparats können 5 bis 90 Gew.-% an Polyhydroxyverbindungen enthalten sein. Diese Stabilisatoren, vor allem Glycerin, schützen die Enzymlösung gegen mikrobiellen Befall, so daß sie unmittelbar im Verfahren der Erfindung eingesetzt werden können. Zum gleichen Zweck können auch Salze, z.B. 1 bis 10 Gew.-% der Enzymlösung an Salzen, wie Natriumchlorid, Kaliumchlorid, Ammoniumsulfat, Magnesiumsulfat o-dergl. eingesetzt werden.

## Beispiel 1

Eine reine Malz-Würze wird in üblicher Weise hergestellt und mit Wasser auf 8,5 Gew.-% Feststoff verdünnt. 12,5 g eines flüssigen Glukosidase-Präparats von Rhizopus oryzae mit einer Glukosidase-Aktivität von 120 GAU/g werden zu 100 l dieser Würze zugesetzt. Die zugefügte Aktivität entspricht 1500 GAU/100 l.

Die Gärung findet bei 15 Grad C statt. Nach der Gärung und der Nachgärung wird das Bier filtriert und bei 74 Grad C in 10 sec beim Durchfluß durch einen Labor-Mantelrohr-Wärmetauscher pasteurisiert, auf Flaschen gefüllt und 8 Wochen gelagert. Danach ergibt die Analyse einen Restgehalt an Kohlehydraten von 1,1 Gew.-%. Der Glukosegehalt beträgt nur 0.03%, woraus eine vernachlässigbar geringe Spaltung von Restdextrin zu Zucker abzuleiten ist.

Zum Vergleich werden 100 l der gleichen Würze mit 6,7 g eines flüssigen Amyloglukosidase-Präparats aus Aspergillus niger (225 GAU/g) versetzt. Nach der Gärung, Filtration, Pasteurisation, Abfüllung auf Flaschen und 8-wöchiger Lagerung, wie beim vorausgehenden Verfahren, ergibt die Analyse wiederum 1,1 Gew.% Rest-Kohlenhydrate, darunter aber einen Glukose-Gehalt von 0,5 Gew.-%. Daraus folgt, daß das Enzym bei der Pasteurisation nur unvollständig inaktiviert worden ist und einen Teil des Restdextrins gespalten hat.

## Beispiele 2-5

Aus Kulturen von mutierten Stämmen von Rhizopus oryzae, die auf niedrige Proteasebildung ausgewählt worden waren, wurden durch Fällung mit Alkohol pulverförmige Enzymprodukte gewonnen. Sie wurden mit Zuckern oder Glycerin vermischt und mit Wasser versetzt. Die erhaltenen Suspensionen wurden bis zur Bildung klarer Lösungen gerührt. Um die Protease zu inaktivieren, wurde der pH-Wert der wäßrigen Lösungen mit wäßrigem Alkali (5n NaOH) angehoben. Einige der Lösungen wurden mehrere Stunden lang erwärmt. Einzelheiten sind den Tabellen 1 und 2 zu entnehmen.

## Beispiel 6

Eine käufliche Rhizopus-AMG, "New Sumyzyme" der Sumitomo Shojo Laisha, Ltd., wurde in der oben beschriebenen Weise behandelt, um die Protease-Nebenaktivität zu inaktivieren.

## Beispiel 7 (Vergleichsversuch)

Das Verfahren gemäß Beispiel 5 wird wiederholt, jedoch der Inaktivierungsschritt durch Alkalibehandlung ausgelassen. Die Bedingungen und Ergebnisse der Beispiele 2 bis 7 sind in den Tabellen 1 und 2 wiedergegeben.

4

Ergebnisse :

1. Die Alkalibehandlung in einer wäßrigen Lösung, die eine Polyhydroxyverbindung enthält, inaktiviert die Protease-Nebenaktivität drastisch, während die AMG-Aktivität erhalten bleibt.

Der Faktor f = GAU/g : mUHB/mg wurde berechnet, wobei ein hoher f-Wert einen niedrigen Proteasegehalt anzeigt. Ohne die Alkalibehandlung (Beispiel 7) bleibt die Protease-Aktivität hoch und f niedrig (f = 1,6).

2. Die Alkalibehandlung flüssiger Rhizopus-AMG führt zu einer guten Lagerstabilität : Nach 5 Monaten bei Raumtemperatur ist der Verlust an AMG-Aktivität unter 10%. Dagegen ist ohne die Alkalibehandlung der Aktivitätsverlust an AMG hoch.

3. Alle Rhizopus-Präparate mit niedrigem Proteasegehalt führen zu einer befriedigenden Schaumstabilität des damit hergestellten Diätbiers. Dagegen stellt man eine geringe Schaumstabilität fest, wenn Rhizopus-AMG mit beträchtlicher Protease-Nebenaktivität verwendet wird (Beispiel 7).

Tabelle 1 | Herstellung einer flüssigen Rhizopus-AMG

| Beispiel Nr. | Aktivität des Pulverprodukts | | | Zusammensetzung des Flüssigprodukts | | | Bedingungen der Protease-Inaktivierungs-Behandlung |
|---|---|---|---|---|---|---|---|
| | GAU/g[1] | mUHB/mg[2] | f | % Pulverprodukt | % Wasser | % Polyhydroxy-verbindung | |
| 2 | 380 | 108 | 3,52 | 33 | 30 | 37 Glycerin | pH = 7,0, 50 Grad C, 1 Stunde |
| 3 | 1004 | 612 | 1,64 | 21 | 20 | 59 Glycerin | pH = 7,5, 55 Grad C, 3 Stunden |
| 4 | 1004 | 612 | 1,64 | 21 | 25 | 48 Glycerin + 4 Sorbit + 2 Natrium-chlorid | pH = 8, 25 Grad C |
| 5 | 1004 | 612 | 1,64 | 21 | 30 | 44 Glycerin + 5 Malto-dextrin | pH = 7,5, 58 Grad C, 1 Stunde danach wieder pH = 5 |
| 6 | 631 | 722 | 0,89 | 27 | 36 | 37 Glucose | pH = 7,5, 55 Grad C, 8 Stunden |
| Vergleichs-Versuch 7 | 1004 | 612 | 1,64 | 21 | 30 | 44 Glycerin + 5 Malto-dextrin | keine Alkalibehandlung |

1) GAU/g = Glucamylase-Einheiten je Gramm Enzymprodukt. 1 GAU erzeugt 1 μMol Glucose pro Minute bei 30 Grad C in einer 1-prozentigen Maltose-Lösung von pH 4,3.

2) UHB/mg = Proteinase-Einheiten je Milligramm Enzymprodukt. 1 UHB ist definiert durch die Freisetzung von trichloressigsäure-löslichen Fraktionen von Hämoglobin entsprechend 1 μMol, Tyrosin pro Minute bei 37 Grad C und pH 5 (Standard-Bedingungen); 1000 mUHB = 1 UHB.

EP 0 215 306 B1

EP 0 215 306 B1

**Tabelle 2**

·Herstellung von flüssiger Rhizopus-AMG

| Beispiel Nr. | Aktivität des flüssigen Produktes | | | Aktivitätsverlust bei der Behandlung | | Aktivität nach 5 Monaten Lagerung bei 25°C | | Schaumstabilität von damit hergestelltem Diätbier[3] |
|---|---|---|---|---|---|---|---|---|
| | GAU/g | mUHB/mg | f | AMG | Protease | GAU/g | % Verlust | |
| 2 | 119,7 | 7,3 | 16,4 | −4,5 % | − 75 % | 114,5 | − 4,6 % | + |
| 3 | 193,3 | 11,2 | 17,2 | −8,3 % | − 91,3 % | 190,8 | − 1,8 % | + |
| 4 | 200,3 | 19,5 | 10,3 | −5 % | − 84,8 % | 185,3 | − 7,5 % | + |
| 5 | 196,0 | 10,3 | 19,0 | −7 % | − 92 % | 190 | − 3,1 % | + |
| 6 | 133,7 | 7,8 | 17,1 | −21,5 % | − 96,1 % | 128 | − 4,2 % | + |
| Vergleichs-Versuch 7 | 208,5 | 127,5 | 1,6 | −1,1 | − 0,8 % | 130,6 | −37,4 % | − |

3) "+" bedeutet zufriedenstellende Schaumstabilität

"−" bedeutet ungenügende Schaumstabilität

# EP 0 215 306 B1

## Ansprüche

1. Verfahren zur Herstellung von Bier unter Zusatz von Amyloglukosidase zur Würze und Inaktivierung der Amyloglukesidase durch Erhitzen nach Abschluß ihrer Einwirkungszeit, dadurch gekennzeichnet, daß als Amyloglukosidase ein proteasearmes Amyloglukosidase-Präparat aus einer Rhizopus-Kultur mit einem Amyloglukosidase/Protease-Verhältnis über 1 GAU/UHB eingesetzt wird und daß dieses unter Pasteurisationsbedingungen inaktiviert wird.

2. Verfahren nach Anspruch 1, dadurch gekennzeichnet, daß die Inaktivierung bei 60 bis 75 Grad C innerhalb 5 sec bis 1 Stunde erfolgt.

3. Verfahren nach den Ansprüchen 1 oder 2, dadurch gekennzeichnet, daß die Inaktivierung nach der Gärung erfolgt.

4. Verfahren nach den Ansprüchen 1 bis 3, dadurch gekennzeichnet, daß die Inaktivierung während des Durchflusses durch einen Wärmetauscher erfolgt.

5. Verfahren nach den Ansprüchen 1 bis 4, dadurch gekennzeichnet, daß man ein Flüssigpräparat einsetzt.

6. Verfahren nach den Ansprüchen 1 bis 5, dadurch gekennzeichnet, daß man ein Amyloglukosidase-Präparat einsetzt, das 5 bis 90 Gew.-% einer Polyhydroxyverbindung (bez. Trockensubstanz) enthält.

7. Verfahren nach den Ansprüchen 5 oder 6, dadurch gekennzeichnet, daß man ein Flüssigpräparat mit einem pH-Wert über 6 einsetzt.

8. Verfahren nach den Ansprüchen 1 bis 7, dadurch gekennzeichnet, daß man ein Amyloglucosidase-Präparat aus einer Rhizopus-Kultur einsetzt, welches zuvor einer Behandlun bei einem H-Wert > 6 unterworfen worden ist.

## Claims

1. Process for preparing beer with the addition of amyloglucosidase to the wort and inactivation of the amyloglucosidase by heating after its period of activity has ended, characterised in that a low-protease amyloglucosidase preparation from a Rhizopus culture with an amyloglucosidase/protease ratio of more than 1 GAU/UHB is used as the amyloglucosidase and that this is inactivated under conditions of pasteurisation.

2. Process according to claim 1, characterised in that the inactivation takes place at 60 to 75°C within a period ranging from 5 seconds to 1 hour.

3. Process according to claim 1 or 2, characterised in that the inactivation takes place after fermentation.

4. Process according to claims 1 to 3, characterised in that the inactivation is carried out during the transit through a heat exchanger.

5. Process according to claims 1 to 4, characterised in that a liquid preparation is used.

6. Process according to claims 1 to 5, characterised in that an amyloglucosidase preparation is used which contains 5 to 90% by weight of a polyhydroxy compound (based on dry matter).

7. Process according to claim 5 or 6, characterised in that a liquid preparation is used with a pH of more than 6.

8. Process according to claims 1 to 7, characterised in that an amyloglucosidase preparation from a Rhizopus culture is used which has previously been subjected to treatment at a pH of more than 6.

## Revendications

1. Procédé de fabrication de bière avec addition d'amyloglucosidase au moût et inactivation de l'amyloglucosidase par chauffage après la fin de sa durée d'action, caractérisé en ce qu'on utilise comme amyloglucosidase une préparation d'amyloglucosidase pauvre en protéase provenant d'une culture de Rhizopus avec un rapport amyloglucosidase/protéase supérieur à 1 GAU/UHB et en ce qu'on l'inactive dans des conditions de pasteurisation.

2. Procédé selon la revendication 1, caractérisé en ce qu'on procède à l'inactivation à 60 à 75°C en 5 secondes à 1 heure.

3. Procédé selon les revendications 1 ou 2, caractérisé en ce qu'on procède à l'inactivation après la fermentation.

4. Procédé selon les revendications 1 à 3, caractérisé en ce qu'on procède à l'inactivation pendant le passage à travers un échangeur de chaleur.

5. Procédé selon les revendications 1 à 4, caractérisé en ce qu'on utilise une préparation liquide.

6. Procédé selon les revendications 1 à 5, caractérisé en ce qu'on utilise une préparation d'amyloglucosidase qui contient de 5 à 90% en poids d'un composé polyhydroxy (appelé substance sèche).

7. Procédé selon les revendications 5 ou 6, caractérisé en ce qu'on utilise une préparation liquide ayant un pH supérieur à 6.

8. Procédé selon les revendications 1 à 7, caractérisé en ce qu'on utilise une préparation d'amyloglucosidase provenant d'une culture de Rhizopus qui a été auparavant soumise à un traitement à un pH supérieur à 6.